# EUROPÄISCHE PATENTANMELDUNG

(11) **EP 0 979 603 A1**
(43) Veröffentlichungstag der Anmeldung: **16.02.2000**
(21) Anmeldenummer: 99115258.8
(22) Anmeldetag: 02.08.1999
(51) Int. Cl.: A01G 33/00

(54) **Verfahren und Vorrichtung zur Algenkultivierung**

(30) Priorität: 06.08.1998 DE 19835656
(71) Anmelder: Zimmermann, Ulrich, 97295 Waldbrunn (DE)
(72) Erfinder: Zimmermann, Ulrich, 97295 Waldbrunn (DE)
(74) Vertreter: Hertz, Oliver, Dr.

(57) **Zusammenfassung**

Bei einem Verfahren zur Kultivierung von Algen werden die Algen in einem Kultivierungsraum 110 mit einer feuchten Atmosphäre angeordnet und mit einer Kultivierungsflüssigkeit benetzt. Der Kultivierungsraum 110 enthält eine Verankerungseinrichtung 120, die zur Befestigung der Algen vorgesehen ist, und eine Flüssigkeitszufuhreinrichtung 130, die zur Zufuhr einer Kultivierungsflüssigkeit in Aerosol-, Tropfen- oder Flüssigkeitsstrahlform eingerichtet ist.

## Beschreibung

Die Erfindung betrifft ein Verfahren zur Kultivierung von mehrzelligen Algen, wie z.B. Braun-, Rot- oder Grünalgen, bei dem die Algen einer Flüssigkeitsbehandlung ausgesetzt sind, und eine Vorrichtung zur Implementierung des Kultivierungsverfahrens.

Algen umfassen niedere pflanzliche Organismen, die als Nutz- und Kulturpflanzen verwendet werden, um Nahrungsmittel oder bestimmte Naturstoffe zu gewinnen. Eine Übersicht über die zur Biomasseproduktion verwendeten Algenarten und deren Verwertung wird von Gunter O. Kirst et al. in "Spektrum der Wissenschaft" (April 1983) gegeben. Es wird generell zwischen ein- oder niederzelligen Mikroalgen und den vielzelligen Makroalgen unterschieden, wobei gerade die Makroalgen (oder: Tang) wegen der großen Biomasseproduktion besonderes Interesse finden. Die Verwertung der Makroalgen wird durch die im folgenden am Beispiel der Braunalgen erläuterten Probleme bei der Algenkultivierung und -ernte beschränkt.

Braunalgen (*Phaeophyta*) sind weltweit die biotechnologisch bedeutsamsten Salzwasserpflanzen. Seit Jahrhunderten werden sie an europäischen, japanischen, süd- und nordamerikanischen oder afrikanischen Küsten gesammelt und verarbeitet. In China und Japan sind sie Nahrungsbestandteil, da sie wertvolle Inhaltsstoffe wie z.B. das Vitamin B₁₂ enthalten. Braunalgen werden jedoch vorwiegend als Rohstoffquelle für die Gewinnung verschiedener Naturstoffe, insbesondere der Alginate, verwendet. Eine Übersichtsdarstellung zur Herstellung, den Eigenschafften und der Verwendung der Alginate in der Lebensmittelindustrie wird von A. Askar in "Alimenta" (Band 21, 1982, S. 165 ff.) gegeben. Kommerziell verfügbares Alginat stammt von Arten der Braunalgenordnung Laminariales (oder: Kelps, Brauntange), deren Biomasse gewöhnlich in Wildpopulationen geerntet wird. Die Vertreter der Laminariales kommen weltweit in kaltgemäßigten Regionen, mit geringerer Artenzahl auch in warmgemäßigten Regionen vor. Die Haupt-Alginatquellen sind beispielsweise der Riesentang *Macroycystis pyrifera* in Kalifornien, diverse *Laminaria*-Arten in Japan, und Namibia bzw. Südafrika, die *Laminaria japonica* in China, die *Laminaria hyperborea* in Norwegen und die *Laminaria digitata* in Frankreich.

Alginate sind Salze der Alginsäure, die sich aus polymeren Blöcken der Mannuronsäure (M-Blocks), Guluronsäure (G-Blocks) und gemischten Blocks (MG-Blocks) zusammensetzt. Guluronsäure-reiches Alginat ist visköser als Mannuronsäure-reiches Alginat. Die tatsächliche Zusammensetzung der Alginate variiert innerhalb der Algenpflanze insbesondere derart, daß der steife Stiel mehr Guluronsäure enthält als das flexible Phylloid. Neben dieser veränderlichen Zusammensetzung innerhalb der Algenpflanze treten aus den folgenden Gründen zusätzliche Variationen auf.

Die gewöhnlich in Küstengewässern wachsenden Braunalgen sind Verunreinigungen durch Umweltverschmutzungen und Fremdorganismen (wie z.B. Mikroorganismen, Muscheln) ausgesetzt. Außerdem sind saisonal (Klimaeinfluß) und geographisch (lokale Nährstoffquellen oder dgl.) verschiedene Wachstumsbedingungen gegeben, wodurch nicht nur die Alginatzusammensetzung in der Braunalge veränderlich ist, sondern auch Zusatzstoffe erzeugt werden können, die bei einer späteren Verwertung ggf. störend sind. Die aus der Wildpopulation eingebrachte Braunalgenernte ist insbesondere durch Epibionten, wie beispielsweise Bakterien, Pilze oder benthische Tiere verunreinigt. Hinzu kommen Verunreinigungen durch wechselnde Umwelteinflüsse (z.B. Stürme, El Niño-Erscheinung etc.) oder Umweltverschmutzungen (Ölpest oder dgl.).

Die aus wildgewachsenen Braunalgen erhaltene Kultur-Biomasse besitzt somit eine geringe Reinheit und eine starke Variabilität in Bezug auf die chemische Zusammensetzung. Dies ist jedoch für medizinische oder biotechnologische Anwendungen unakzeptabel.

Um die genannten Nachteile bei Wildpopulationen einzuschränken, wurden Meeres- oder Aquakulturen geschaffen, bei denen die Braunalgen in Tanks oder anderweitig abgegrenzten Bereichen kultiviert werden. Damit lassen sich zwar einige der Umwelteinflüsse, wie z.B. die Wirkung der Epibionten oder Umweltverschmutzungen verringern. Es treten jedoch die folgenden Probleme auf, durch die eine großtechnische Kultivierung bisher nicht praktikabel ist.

Erstens sind die Aquakulturen weiter den wechselnden Klimaeinflüssen ausgesetzt. Damit ist die Reinheit der Kultur-Biomasse wie bei den Wildpopulationen saisonal schwankend. Zweitens müssen die Braunalgen wegen der relativ uneffektiven Nährstoffaufnahme durch die Algenoberfläche im Kultivierungstank bewegt oder das Wasser in Tanks umgewälzt werden. Die Bewegung von Wasser in großvolumigen Tanks stellt jedoch bei den kommerziell interessierenden Dimensionen ein erhebliches Problem dar. So ist beispielsweise für die Kultivierung der Braunalgen mit einem Feuchtgewicht von 10 kg ein 300 l-Tank erforderlich. 10 kg Feuchtgewicht ergeben jedoch nur rund 1 kg Trockengewicht bzw. 100 g Alginat. Bei einem Alginatbedarf im Tonnenmaßstab ergeben sich unannehmbar große Tankvolumina. Zusätzlich ergeben sich Probleme durch den Einsatz von Salzwasser (Korrosionsbekämpfung) und die erforderliche Tankkühlung auf Temperaturen unterhalb von 20 °C. Außerdem würde die Produktion von etwa 1 kg Trockengewicht Algenbiomasse in einem 300 l-Tank rund zwei Monate dauern. Der Stromverbrauch für die Flüssigkeitsumwälzung, die Belüftung und Kühlung über einen derartigen Zeitraum würde die Produktionskosten weiter unannehmbar erhöhen.

Ein weiteres Problem der Kultivierung in abgegrenzten Meereskulturen besteht darin, daß die Entwicklung bestimmter Algenspezies zur Vermeidung einer Florenverfälschung durch Einbringung nichtheimischer Arten ausgeschlossen ist. Damit ist eine gezielte Verbesserung der Produktqualität unmöglich.

Die hier in Zusammenhang mit den Braunalgen genannten Probleme treten entsprechend auch bei anderen Algenarten auf, die für medizinische oder biotechnologische Biomasseproduktionen von Interesse sind.

Die Aufgabe der Erfindung ist es, ein Verfahren zur Algenkultivierung zu schaffen, mit dem die genannten Nachteile der bisherigen Algenkultivierung und -ernte überwunden werden und das Algenwachstum unter kontrollierten Bedingungen insbesondere derart erfolgt, daß bei der Kultivierung definierte Algenarten unabhängig von Einflüssen der freien Umwelt und unter minimierten Fremdbedingungen entwickelt werden können. Es ist auch eine Aufgabe der Erfindung, eine Vorrichtung zur Implementierung des Verfahrens anzugeben.

Diese Aufgabe wird durch ein Verfahren bzw. Vorrichtungen mit den Merkmalen gemäß den Patentansprüchen 1 bzw. 12 oder 18 gelöst. Vorteilhafte Ausführungsformen und Verwendungen der Erfindung ergeben sich aus den abhängigen Ansprüchen.

Die Erfindung basiert auf der Idee, abweichend von den bisherigen Kultivierungen in großen Salzwasservolumina, Algen in einem Kultivierungsraum mit einer feuchten Atmosphäre frei anzuordnen und mit einer Kultivierungsflüssigkeit zu benetzen. Es ist vorgesehen, die Algen an einer Verankerungseinrichtung befestigt und ggf. mit einer zusätzlichen Halterungseinrichtung freiliegend oder freihängend im Kultivierungsraum anzuordnen. Die Benetzung erfolgt vorzugsweise durch eine laufende Zufuhr der Kultivierungsflüssigkeit auf die Algenoberfläche. Diese Flüssigkeitszufuhr erfolgt derart, daß die Algenoberfläche ununterbrochen von einem Flüssigkeitsfilm bedeckt ist. Die Flüssigkeitszufuhr kann ein Bespritzen, Berieseln, Betropfen, Besprühen oder ähnliches Aufbringen der Kultivierungsflüssigkeit in Aerosol- oder Tropfenform oder als Flüssigkeitsstrahl umfassen.

Die Kultivierung erfolgt vorzugsweise in einer feuchten Atmosphäre. Die relative Feuchte der Kultivierungsatmosphäre wird vorzugsweise nahe oder in der Sättigung eingestellt und liegt im Bereich oberhalb 80 % vorzugsweise im Bereich von 90-100 %.

Eine erfindungsgemäße Vorrichtung wird durch einen Kultivierungsraum geschaffen, der mit einer Verankerungseinrichtung zur Befestigung der Algen, ggf. einer zusätzlichen Stützeinrichtung und einer Zufuhreinrichtung für die Kultivierungsflüssigkeit versehen ist. Gemäß bevorzugter Ausführungsformen sind ferner eine Flüssigkeitssammeleinrichtung und eine Kreislaufeinrichtung mit einer Antriebs- und einer Regenierungseinrichtung vorgesehen. Mit der Flüssigkeitssammeleinrichtung wird von den Algen abtropfende Kultivierungsflüssigkeit aufgefangen und der Kreislaufeinrichtung zugeführt. Die Regenerierungseinrichtung ist dazu eingerichtet, die Zusammensetzung der Kultivierungsflüssigkeit in vorbestimmter Weise in Bezug auf den Nährstoffgehalt und ggf. zuzufügende Wachstumsstoffe einzustellen.

Die Erfindung besitzt die folgenden Vorteile. Erstmalig läßt sich Algenfrischmaterial unter kontrollierten Bedingungen ohne die oben erläuterten Variabilitäten aufgrund veränderlicher Umwelteinflüsse züchten. Damit wird eine erhebliche Verbesserung der Produktqualität, insbesondere eine Reduzierung der Akkumulation toxischer Substanzen, erzielt. Die kultivierten Algen sind Ausgangsmaterial für die Gewinnung von hochreinem Alginat für medizinische Zwecke. Da erfindungsgemäß lediglich ein Flüssigkeitsfilm auf den im übrigen in einer gas- oder dampfförmigen Atmosphäre angeordneten Algen ausgebildet wird, ergibt sich eine erhebliche Flüssigkeitseinsparung von mindestens 10 bis 20 % gegenüber den bisherigen Aquakulturen. Durch Einstellung der Zusammensetzung der Kultivierungsflüssigkeit läßt sich das Pflanzenwachstum in vorbestimmter Weise steuern.

Weitere Vorteile ergeben sich daraus, daß gezielt verschiedene Algenspezies (*Laminaralis, Echlorea, Ectocarpalis, Fucalis* etc.) verwendet werden können, die sich durch die chemische Struktur der jeweiligen Alginate unterscheiden. Durch das geschlossene System des Kultivierungsraumes ist eine Florenverfälschung der Umgebung ausgeschlossen. Neben dieser artspezifischen Selektion kann ferner eine organspezifische Selektion durchgeführt werden, in dem durch Manipulationsmaßnahmen während der Kultivierung das Wachstum bestimmter Pflanzenteile gefördert wird. Hierzu kann vorgesehen sein, daß die Phylloide, Kauloide und Rhizoide nach der Kultivierung voneinander getrennt und separat verarbeitet werden. Durch die erfindungsgemäße Kultivierung an Land ist es möglich, gezielt und unabhängig von Saison- oder Umwelteinflüssen in reproduzierbarer Art und Weise verschiedene Sorten hochreiner Algenbiomasse zu produzieren, die insbesondere für die Herstellung sehr hochmolekularer Guluronat- bzw. Mannuronatreicher Alginate für medizinische oder biotechnologische Anwendungen von Interesse sind.

Die erfindungsgemäße Algenoberflächenbenetzung besitzt den Vorteil eines raschen Flüssigkeits- und Gasaustausches auf der Pflanzenoberfläche. Dies ermöglicht einen geringeren Reinigungsaufwand für die Kultivierungsflüssigkeit und eine effizientere Lichtversorgung der Algen.

Die Ernte der kultivierten Algen wird erheblich vereinfacht und verbessert. Der bei Wildpopulationen übliche Zusatz von Chemikalien zur Vermeidung von Verrottungs- oder Zersetzungserscheinungen an den geernteten Algen wird vollständig überflüssig. Die Algen können am Ort der Weiterverarbeitung kultiviert bzw. gezüchtet werden. Ein zusätzlicher Transport ist nicht erforderlich. Es ist insbesondere möglich, die Kultivierung weitgehend frei von störenden Mikroorganismen durchzuführen, so daß eine ununterbrochene Sterilkette von der Kultivierung bis zum Einsatz bei der jeweiligen medizinischen oder biotechnologischen Anwendung gegeben ist.

Die relativ geringen Flüssigkeitsförderraten erlauben den Aufbau von Teilen des Kreislaufs (insbesondere Pumpen und dgl.) aus korrosionsfreien Kunststoffen.

Weitere Vorteile und Einzelheiten der Erfindung werden im folgenden unter Bezug auf die beigefügten Zeichnungen beschrieben. Es zeigen:
- Fig. 1: eine schematische Übersichtsdarstellung einer erfindungsgemäßen Kultivierungsvorrichtung;
- Fig. 2: Illustrationen der Anordnung von Algen im Kultivierungsraum, und
- Fig. 3: schematische Illustrationen zu Manipulierungsmaßnahmen zur Beeinflussung des Algenwachstums.

Die Erfindung wird im folgenden am Beispiel der Kultivierung von Braunalgen (z.B. *Laminaria pallida, Laminarales, Echlorea, Fucales*), insbesondere in Hinblick auf die Alginatgewinnung erläutert. Es wird jedoch betont, daß die Erfindung analog bei allen mehrzelligen oder in Gewebe differenzierenden Algen, wie z.B. den Rot- oder Grünalgen angewendet werden kann. Die erfindungsgemäße Kultivierung eignet sich insbesondere für die reproduzierbare Kultivierung von Algen zur Gewinnung von Agar, medizinisch oder biotechnologisch relevanten Lipiden, Vitaminen oder Geschmacksverstärkern.

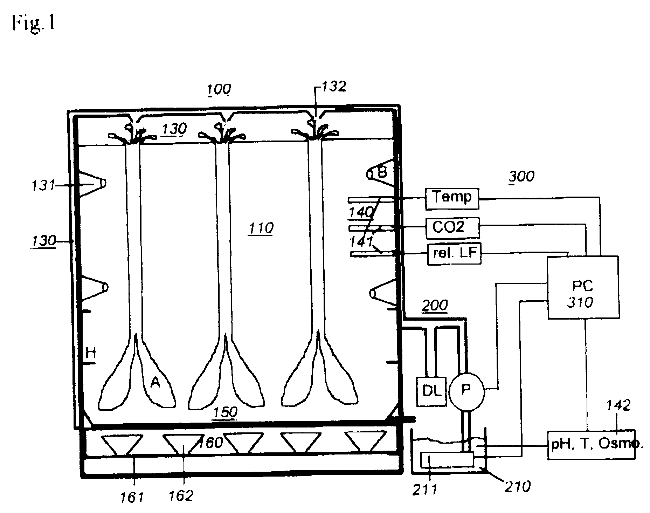

Eine erfindungsgemäße Kultivierungsvorrichtung oder Algenaufzuchtsanlage umfaßt gemäß Fig. 1 eine im Schnitt dargestellte, geschlossene Kammer 100, die einen Kultivierungsraum 110 bildet und mit einer Verankerungseinrichtung 120, Flüssigkeitszufuhreinrichtungen 130, Sensoreinrichtungen 140, einer Flüssigkeitssammeleinrichtung 150 und einer Beleuchtungseinrichtung 160 versehen ist, eine Kreislaufeinrichtung 200, die mit den Flüssigkeitszufuhreinrichtungen 130 und der Flüssigkeitssammeleinrichtung 150 verbunden ist, und eine Steuereinrichtung 300.

Die Kammer 100 ist als flüssigkeits- und gasdichter Bioreaktor aus einem gegenüber der jeweils verwendeten Kultivierungsflüssigkeit inerten Material aufgebaut. Die Kammer 100 besteht vorzugsweise aus korrosionsfreiem Metall wie z.B. Edelstahl oder zumindest teilweise aus Glas oder lichtdurchlässigem Kunststoff. Die Maße der im Schnitt in aufrechter Betriebsposition dargestellten Kammer können beispielsweise 2 · 2 m² für die Bodenfläche und 2.5 m² für die Kammerhöhe betragen. Anwendungsabhängig können diese Maße an die Größe der zu kultivierenden Algen angepaßt sein.

Gemäß einer bevorzugten Gestaltung der Erfindung wird eine Vielzahl von Kammern analog zur Kammer 100 gemäß Fig. 1 modular zu einer Kultivierungsanlage zusammengesetzt. Der modulare Aufbau besitzt den Vorteil einer vereinfachten Steuerung der lokal wirkenden Wachstumsbedingungen und eine einfache Austauschbarkeit, falls eine Kammer verunreinigt oder z.B. von einem Pilz befallen ist. Beim modularen Aufbau einer Kultivierungsanlage aus einer Vielzahl von Kammern 100 mit einer Vielzahl von Kreislaufeinrichtungen 200 kann eine für alle Kammern und Kreislaufeinrichtungen gemeinsam wirkende Steuerung 300 vorgesehen sein.

Die Verankerungseinrichtung 120 ist zur Aufnahme der als Haftstruktur wirkenden Gewebeteile der zu kultivierenden Algen vorgesehen. Die Verankerungseinrichtung 120 kann beispielsweise durch ein Sand- oder Kiesbett gebildet werden, mit dem die Haftstruktur verwachsen ist. Das Sand- oder Kiesbett befindet sich auf einer Trägerschale, die anwendungsabhängig an die jeweils gewünschte Anordnung der Algen in der Kammer angepaßt ist. Bei der dargestellten Ausführungsform besitzt die Trägerschale der Verankerungseinrichtung 120 beispielsweise Öffnungen, durch die die Algen A von der Haftstruktur ausgehend freihängend nach unten wachsen. Die Algen A können aber auch über den Rand der Trägerschale nach unten wachsen.

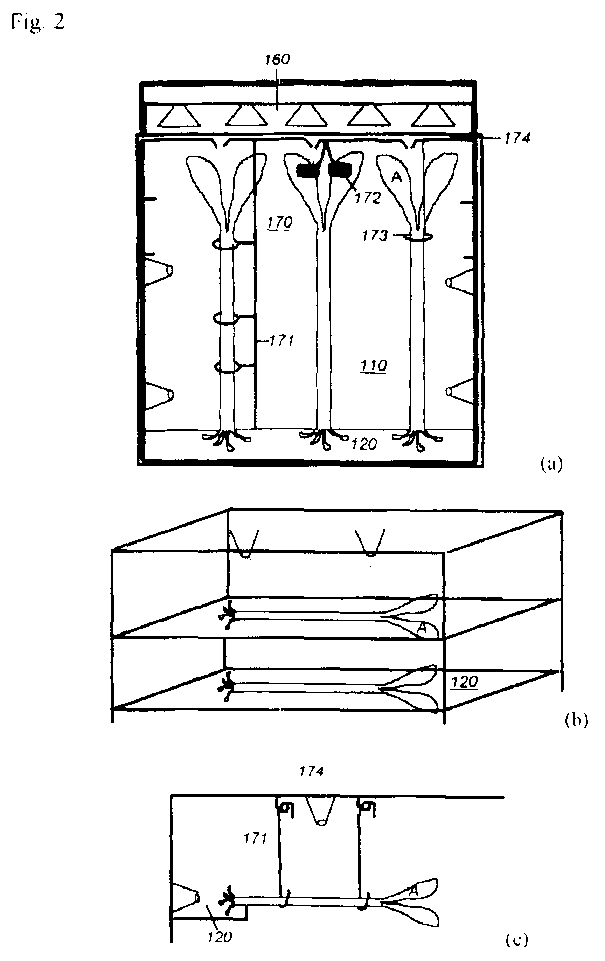

Andere Gestaltungen der Verankerungseinrichtung sind unten unter Bezug auf Fig. 2 erläutert. Das hängende Wachstum gemäß Fig. 1 besitzt den Vorteil eines geringen Platzbedarfs.

Die Flüssigkeitszufuhreinrichtungen 130 werden je nach anwendungsabhängig gewünschter Art der Flüssigkeitszufuhr gestaltet. In Fig. 1 sind beispielhaft Verneblerdüsen 131 und Tropfdüsen 132 gezeigt. An den Verneblerdüsen 131 erfolgt eine Verneblung der Kultivierungsflüssigkeit unter Verwendung einer Druckluftquelle DL in der Kreislaufeinrichtung 200. Die Tropfdüsen 132 werden vorzugsweise zum Abtropfen der Kultivierungsflüssigkeit, hier speziell auf die im oberen Teil der Kammer 100 angeordneten Haftstrukturen in der Verankerungseinrichtung 120, eingerichtet. Alternative Flüssigkeitszuführeinrichtungen sind Flüssigkeitstrahl- oder Spritzeinrichtungen oder Vorrichtungen zur Betropfung einer rotierenden Fläche, von der die Kultivierungsflüssigkeit in Form kleiner Tropfen in die Kammer 100 spritzt.

Die Flüssigkeitszufuhr dient der Aufrechterhaltung einer hohen oder gesättigten Feuchte in der Kammeratmosphäre und der Benetzung der Algenoberfläche. Kultivierungsflüssigkeit, die an der Alge nach unten abläuft und vom unteren Ende abtropft, wird von der Flüssigkeitssammeleinrichtung aufgefangen. Bei der dargestellten Ausführungsform besteht die Flüssigkeitssammeleinrichtung aus einer Wanne 150. Diese besteht vorzugsweise aus einem lichtdurchlässigen Material, falls eine Beleuchtung der Kammer von der Bodenseite her vorgesehen ist. Von der Wanne 150 mündet ein Abfluß in ein Vorratsgefäß 210 der Kreislaufeinrichtung 200.

Die Beleuchtungseinrichtung 160 ist im Bodenbereich der Kammer 100 vorgesehen. Sie umfaßt bei der dargestellten Ausführungsform eine wasser- und dampfdichten Beleuchtungskammer 161 aus einem lichtdurchlässigen Material (z.B. Plexiglas) und eine Vielzahl von Lampen 162. Die Lampen 162 sind anwendungsabhängig zur Erzielung einer bestimmten spektralen Leuchtdichteverteilung ausgewählt (z.B. Halogenlampen). Die Lampen 162 sind vorzugsweise mit einer Helligkeitssteuerung (z.B. Dimmer) versehen. Die Beleuchtungseinrichtung 160 kann höhenverstellbar (Stelleinrichtung H), kühlbar und/oder mit einem Wärmeschutzfilter ausgeführt sein. Alternativ zur Gestaltung mit Lampen 162 kann die Kammer 100 auch mit Tageslicht beleuchtet werden, das entweder direkt von oben oder von mindestens einer Seite durch eine lichtdurchlässige Kammerwand und/oder über Umlenkspiegel von unten durch die lichtdurchlässige Wanne 150 einfällt.

Die Sensoreinrichtungen 140 umfassen Atmosphärensensoren 141 und Kultivierungsflüssigkeitssensoren 142, die vorzugsweise jeweils in der Kammer 100 angeordnet sind bzw. mit dem Vorratsgefäß 210 in Verbindung stehen. Mit den Atmosphärensensoren 141 werden entwicklungsbestimmende Parameter im Innenraum der Kammer 100 bzw. in der Kultivierungsatmosphäre gemessen. In Fig. 1 sind beispielhaft Temperatur-, CO₂- und LuftfeuchteSensoren gezeigt. Zusätzlich können beispielsweise Licht- oder Drucksensoren (jeweils nicht dargestellt) vorgesehen sein. Die Sensoren sind mit einer Steuereinheit 310 der Steuerung 300 verbunden. Die Kultivierungsflüssigkeitssensoren 142 sind zur Messung physikalischer und/oder chemischer Parameter der Kultivierungsflüssigkeit vorgesehen. Sie können beispielsweise einen weiteren Temperatursensor, einen pH-Sensor und Sensoren zur Erfassung der osmotischen Konzentration der Kultivierungsflüssigkeit umfassen. Die Kultivierungsflüssigkeitssensoren 142 sind zur Meßwerterfassung mit der Kultivierungsflüssigkeit im Vorratsgefäß 210 und zur Weitergabe der Meßwerte mit der Steuereinheit 310 verbunden.

Die Kreislaufeinrichtung 200 ist über Leitungen in Form fest installierter Rohre oder Schläuche mit den Flüssigkeitszufuhreinrichtungen 130 bzw. der Flüssigkeitssammeleinrichtung 150 verbunden und enthält das Vorratsgefäß 210, eine Antriebseinrichtung 220 und eine (nicht dargestellte) Regenerierungseinrichtung. Im Vorratsgefäß 210 wird die mit der Flüssigkeitssammeleinrichtung 150 aufgefangene Kultivierungsflüssigkeit gesammelt und in Bezug auf die Temperatur und Zusammensetzung vermessen. Das Vorratsgefäß 210 ist mit einer Temperierungseinrichtung 211 versehen, die mit einem Temperatursensor 142 und der Steuereinheit 310 Teil einer Temperaturregelung ist. Als Antriebseinrichtung 220 ist jede Flüssigkeitsfördereinrichtung vom Vorratsgefäß 210 zu den Flüssigkeitszufuhreinrichtungen 130 geeignet. Beispielhaft sind in Fig. 1 eine Drucklufteinrichtung DL und eine Pumpe P dargestellt. Die Antriebseinrichtungen 220 sind mit der Steuereinheit 310 verbunden.

Eine manuell oder automatisch betätigte Regenerierungseinrichtung (nicht dargestellt) ist dazu vorgesehen, in Reaktion auf einen verringerten Nährstoffgehalt in der Kultivierungsflüssigkeit z.B. in Abhängigkeit von einem Signal des Sensors 142 oder einer vorbestimmten Zeitsteuerung Nährstoffe zur Kultivierungsflüssigkeit im Vorratsgefäß 210 zuzuführen.

Die Steuerung 300 umfaßt die Steuereinheit 310, deren Funktion im einzelnen unten unter Bezug auf die erfindungsgemäße Verfahrensweise erläutert wird, und deren Verbindungen mit den Sensoren 141, 142 und der Kreislaufeinrichtung 200.

Die Atmosphäre in der Kammer 100 ist anwendungsabhängig aus CO₂ und gegebenenfalls Stickstoff, Sauerstoff etc. zusammengesetzt. Die Kultivierungsflüssigkeit ist eine wässrige Nährstofflösung mit einer Zusammensetzung, die im wesentlichen der Zusammensetzung von Meerwasser der Ozeane, Mittel- oder Randmeere entspricht. Demnach enthält die Kultivierungsflüssigkeit einen Salzgehalt im Bereich von 0,1 bis 4 %. Die enthaltenen Salze umfassen insbesondere Natriumchlorid und Calziumchlorid. Es können anwendungsabhängig höhere Salzkonzentrationen oder weitere Nähr- oder Wachstumsstoffe vorgesehen sein. Es kann beispielsweise der Kultivierungsflüssigkeit gezielt eine vorbestimmte Menge von Wachstumshormonen zugesetzt werden, um das Wachstum bestimmter Algenorgane mit bestimmten Alginatzusammensetzung zu fördern. Beispiele für verwendbare Wachstumshormone sind Pheromone, Auxin oder Abscisinsäure.

Die erfindungsgemäße Verfahrensweise umfaßt ein Anordnen der zu kultivierenden Algen in der Kammer 100 entsprechend einer der unten erläuterten Gestaltungen und ein laufendes Benetzen der Algen mit der Kultivierungsflüssigkeit. Einzelheiten dieses Verfahrens werden im folgenden beispielhaft erläutert.

Junge Algengewächse oder Gametophyten, die vorzugsweise in Laborkulturen (Bioreaktor) angezüchtet sind, werden in der Kammer 100 angeordnet, wobei der früheste Zeitpunkt für das Anordnen der Algengewächse die Ausbildung von Gewebedifferenzierungen in den Jungalgen ist. Es können aber auch bereits kultivierte Algen mit ausgeprägten Differenzierungen oder ausgeprägten Organen in die Kammer eingesetzt werden. Beispielsweise werden Algen der Art *Laminaria pallida* mit einer Länge von rund 1 m nebeneinander auf dem Sand- oder Kiesbett der Verankerungseinrichtung 120 ausgebreitet und so ausgerichtet, daß (beim dargestellten Beispiel gemäß Fig. 1) ein Wachstum von der Trägerschale nach unten ermöglicht wird. Die Algen A hängen vom oberen Bereich der Kammer 100 hinab und werden mit der Flüssigkeitszufuhreinrichtung 130 von oben betropft und andererseits seitlich besprüht. Die Flüssigkeitsförderrate der Flüssigkeitszufuhreinrichtungen 130 kann beispielsweise im Bereich von 100 ml bis 10 l pro m² und Stunde liegen. Diese Rate wird ausgewählt, um kontinuierlich einen Film der Kultivierungsflüssigkeit auf der Algenoberfläche zu bilden. Die Kultivierungsflüssigkeit wird nach Abtropfen von den Algen und Auffangen mit der Flüssigkeitssammeleinrichtung 150 durch die Kreislaufeinrichtung 200 ständig umgewälzt, temperiert, gereinigt und ggf. mit Nährstoffen regeneriert. Die künstliche oder mit Tageslicht gebildete Beleuchtung wird anwendungsabhängig eingestellt und beträgt beispielsweise 20 bis 500 µmol/m² s (Photonen pro m² Blattfläche und Sekunde). Während des Wachstums der Algen werden die Wachstumsparameter in der Kammer 100 und die Eigenschaften der Kultivierungsflüssigkeit (insbesondere pH-Wert, Osmolarität) laufend überwacht und ggf. mit konventioneller Regelungstechnik oder Fuzzy-Regelungs-Logik nachgestellt. Hierzu bilden die Sensoren, die Temperierungseinrichtung, die Regenerierungseinrichtung und die Steuereinheit einen Regelkreis. Die Meßwerte der Sensoren werden laufend in der Steuereinheit mit vorbestimmten Referenzwerten verglichen und bei Abweichung der Meßwerte von den Referenzwerten werden die jeweiligen Korrekturen durch Betrieb der Temperierungs- oder Regenerierungseinrichtungen durchgeführt. In der Steuereinheit 310 können auch vorbestimmte Programmabläufe zur Steuerung der Temperatur, Beleuchtung, stofflichen Wachstumssteuerung und mechanischen Wachstumsstabilisierung gespeichert sein.

Zusätzlich können Reinigungsschritte vorgesehen sein, bei denen die Flüssigkeitszufuhreinrichtungen mit nicht-salzigem Wasser gespült werden.

Alternativ zur hängenden Kultivierung von Algen ist es erfindungsgemäß möglich, die Algenpflanzen in anderen Formen im Kultivierungsraum anzuordnen, wie dies im folgenden unter Bezug auf Fig. 2 erläutert wird.

Fig. 2 zeigt lediglich Ausschnittsdarstellungen einer erfindungsgemäßen Vorrichtung, die im übrigen analog zum Aufbau gemäß Fig. 1 zusammengesetzt sein kann. Die Kultivierungsalternativen bestehen im aufrechten Wachstum gemäß Fig. 2a im horizontal liegenden Wachstum gemäß Fig. 2b oder im horizontal hängenden Wachstum gemäß Fig. 2c.

Beim aufrechten Wachstum (Fig. 2a) ist die Verankerungseinrichtung 120 für die Haftstrukturen der Algen A im unteren Teil der Kammer 100 angebracht. Zusätzlich sind in der Kammer Stützeinrichtungen 170 in Form eines Haltedrahtes 171, von Halteclips 172 und/oder eines Halteringes 173 vorgesehen, die jeweils mit einem oberen Träger 174 verbunden sind, um eine vertikale Ausrichtung der Pflanze während des Kultivierungsverfahrens zu gewährleisten. Die Stützeinrichtung 170, die allgemein zur vertikalen Ausrichtung der Algen vorgesehen ist, kann auch horizontal verlaufende Stützelemente (nicht dargestellt) in der Kammer 100 umfassen. Bei der dargestellten Ausführungsform gemäß Fig. 2a ist die Beleuchtungseinrichtung 160 auf der Oberseite der Kammer 10 angebracht.

Beim horizontal liegenden Wachstum gemäß Fig. 2b sind die Algen auf einem flachen Sand- oder Kiesbett 120 ausgebreitet, das simultan als Verankerungseinrichtung und Stützeinrichtung dient. In diesem Fall werden die Algen vorzugsweise von der freiliegenden Seite der Pflanzen her benetzt. Es kann vorgesehen sein, daß zur Gewährleistung einer genügenden Beleuchtung die Sand- oder Kiesbetten 120 in der Kammer geeignet versetzt angeordnet sind. Es kann ferner zusätzlich in der Kammer ein (nicht dargestellter) Wendemechanismus zum Wenden oder Umlegen der zu kultivierenden Algen vorgesehen sein.

Bei der horizontal hängenden Anordnung der Algen A gemäß Fig. 2c ist in der Kammer 100 eine Stützeinrichtung 170 in Form von Haken 171 vorgesehen, die vom Träger 174 herabhängen. Bei dieser Gestaltung ist die Verankerungseinrichtung 120 als schmale, an der Kammerwand verlaufende Schale mit einem Sand- oder Kiesbett oder einem ähnlichen Trägermaterial zur Aufnahme der Haftstruktur der Alge vorgesehen.

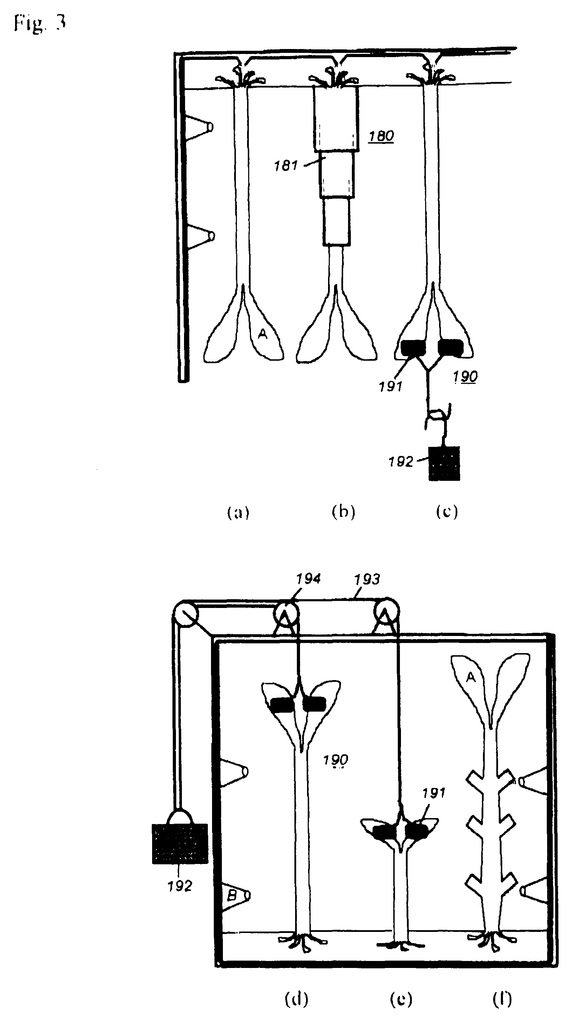

Ein besonderer Vorteil der Erfindung besteht in der gezielten Manipulierbarkeit der Algenkultivierung. Es sind erfindungsgemäß verschiedene mechanische Manipulierungsmaßnahmen vorgesehen, die zusätzlich zu den chemischen Wachstumsbeeinflussungen mit Wachstumsfaktoren (Hormone, Pheromone) oder definiert zusammengesetzten Kulturmedien (Düngemitteln) oder auch unabhängig von diesen realisiert werden können. Unter mechanischen Manipulierungsmaßnahmen werden hier alle Vorkehrungen verstanden, die mit mechanischen Mitteln die Wirkung äußerer oder innerer Wachstumsfaktoren bei der Algenkultivierung beeinflussen. Gemäß Fig. 3 ist es beispielsweise möglich, gegenüber dem freien Wachstum (a) eine Abschirmeinrichtung 180 (Fig. 3b) vorzusehen. Die Abschirmeinrichtung 180 dunkelt die Stiele (Cauloide) der Pflanzen während des Wachstums vom Licht ab, so daß die Algen zu einem verstärkten Längenwachstum gezwungen werden (positiver Phototropismus). Damit können im Ergebnis der Kultivierung vorrangig die Cauloide mit einem erhöhten Anteil von Guluronsäure (s.o.) geerntet werden.

Die Abschirmeinrichtung 180 kann in Form eines Rohres oder Schlauches über den Algenstiel geschoben werden. Ein Teleskopaufbau mit gegeneinander verschiebbaren Abschirmteilen 181 wird zur Einstellung einer veränderlichen Abschirmlänge während des Längenwachstums bevorzugt. Bei vertikal aufgerichtetem oder horizontalem Wachstum kann die Abschirmeinrichtung 180 auch als Stützeinrichtung gemäß Fig. 2 vorgesehen sein.

Gemäß Fig. 3c-e werden die Algen während der Kultivierung Zugkräften ausgesetzt. Die erfindungsgemäßen Zugeinrichtungen 190 umfassen alle Arten mechanischer Zugkraftausübung in Längswachstumsrichtung z.B. durch kontinuierliche Zugkräfte, die über ein Gewicht ausgeübt werden, oder durch Federkräfte (nicht dargestellt), die mit geeigneten Federeinrichtungen ausgeübt werden. Gemäß Fig. 3c umfaßt beim hängenden Wachstum die Zugeinrichtung 190 Befestigungsclipse 191, mit denen ein Zuggewicht 192 an den Blättern der Algen befestigt ist. Beim aufrecht nach oben geführten Wachstum gemäß den Figuren 3d, e sind ebenfalls Befestigungsclipse 191 vorgesehen, die mit dem Gewicht 192 über Zugseile 193 verbunden sind, die mit Umlenkrollen 194 geführt werden. Die Zugeinrichtung 190 fördert das Streckungs- oder Längenwachstum der Algen dadurch, daß die mechanische Belastung in der Brandungszone bei den Wildpopulationen simuliert wird. Dementsprechend werden die Gewichte 192 algenartabhängig vorzugsweise mit einer Masse im Bereich von 100 bis 1.000 g ausgewählt.

Schließlich zeigt Fig. 3f eine Möglichkeit einer mechanischen Wachstumsbeeinflussung durch Entfernen bestimmter Pflanzenorgane während des Wachstumsvorgangs. In regelmäßigen Abständen werden die Algenblätter manuell oder mit einer Schneideinrichtung entfernt und einer Verwertung zugeführt, so daß hierbei Biomasse mit einem erhöhten Mannuronsäure-Anteil gewonnen wird.

Die Erfindung ist nicht auf die dargestellten Ausführungsformen beschränkt. Vielmehr können der Kultivierungsraum, die Kreislaufeinrichtung und die Steuerung anwendungsabhängig modifiziert werden. Es kann beispielsweise vorgesehen sein, daß die Flüssigkeitszufuhreinrichtungen 130 nicht an der Kammerwand, sondern auch über Leitungsverbindungen im Kammerinneren angeordnet sind. Ferner kann abweichend von der einseitigen Beleuchtung vorgesehen sein, daß auch die Lampen der Beleuchtungseinrichtung im Inneren der Kammer verteilt sind. Weitere Modifizierungsmöglichkeiten beziehen sich auf die Kammer- oder Reaktorform, den Betrieb der Kreislaufeinrichtung und die Auswahl und Anbringung der Sensoren.

## Patentansprüche

1. Verfahren zur Kultivierung von Algen, bei dem die Algen in einem Kultivierungsraum (110) mit einer feuchten Atmosphäre angeordnet und mit einer Kultivierungsflüssigkeit benetzt werden.

2. Verfahren gemäß Anspruch 1, bei dem die Algen mit ihrer Haftstruktur an einer Verankerungseinrichtung (120) befestigt und auf der Verankerungseinrichtung (120) liegend, von dieser vertikal nach unten oder horizontal ausgerichtet hängend oder von dieser vertikal nach oben gerichtet angeordnet werden.

3. Verfahren gemäß Anspruch 1 oder 2, bei dem die Algen mit der Kultivierungsflüssigkeit derart benetzt werden, daß während des Algenwachstums kontinuierlich ein Flüssigkeitsfilm der Kultivierungsflüssigkeit auf der Algenoberfläche gegeben ist.

4. Verfahren gemäß Anspruch 3, bei dem das Benetzen der Algen ein Berieseln, Betropfen, Besprühen, Bespritzen oder Bestrahlen mit der Kultivierungsflüssigkeit umfaßt.

5. Verfahren gemäß einem der vorhergehenden Ansprüche, bei dem die Kultivierungsflüssigkeit nach Abtropfen von den Algen aufgefangen, regeneriert und wieder zum Benetzen der Algen zugeführt wird.

6. Verfahren gemäß einem der vorhergehenden Ansprüche, bei dem als Kultivierungsflüssigkeit Wasser mit einem Salzgehalt entsprechend dem Salzgehalt des Meeres zugeführt wird.

7. Verfahren gemäß Anspruch 6, bei dem der Kultivierungsflüssigkeit Zusatzstoffe zur Wachstumsförderung zugesetzt werden.

8. Verfahren gemäß einem der vorhergehenden Ansprüche, bei dem das Algenwachstum mit mechanischen Mitten derart beeinflußt wird, daß vorbestimmte Organe der Algen bevorzugt wachsen.

9. Verfahren gemäß Anspruch 8, bei dem zum bevorzugten Stielwachstum auf die Alge in Wachstumsrichtung wirkende Zugkräfte ausgeübt und/oder der Algenstiel mit einer Abschirmeinrichtung (180) zur Auslösung eines verstärkten Längswachstums durch positiven Phototropismus abgeschattet werden.

10. Verfahren gemäß Anspruch 8, bei dem zum verstärkten Blattwachstum während des Algenwachstums in vorbestimmten Zeitabständen die Blätter entfernt werden.

11. Verfahren gemäß einem der vorhergehenden Ansprüche, bei dem die Kultivierung in einer geschlossenen Kammer (100) erfolgt und ein Regelungsprozeß vorgesehen ist, mit dem die atmosphärischen Parameter in der Kammer und/oder die Zusammensetzung der Kultivierungsflüssigkeit auf vorbestimmte Werte eingestellt werden.

12. Vorrichtung zur Kultivierung von Algen in einer feuchten Atmosphäre, bestehend aus einem Kultivierungsraum (110), in dem eine Verankerungseinrichtung (120), die zur Befestigung der Algen vorgesehen ist, und eine Flüssigkeitszufuhreinrichtung (130), die zur Zufuhr einer Kultivierungsflüssigkeit in Aerosol-, Tropfen- oder Flüssigkeitsstrahlform eingerichtet ist, enthalten sind.

13. Vorrichtung gemäß Anspruch 12, bei der eine Kreislaufeinrichtung (200) vorgesehen ist, die mit einer Flüssigkeitssammeleinrichtung (150) im Kultivierungsraum (110) und der Flüssigkeitszufuhreinrichtung (130) verbunden ist und ein Vorratsgefäß (210) und eine Antriebseinrichtung (220) zur Förderung der Kultivierungsflüssigkeit vom Vorratsgefäß (210) zur Flüssigkeitszufuhreinrichtung (130) umfaßt.

14. Vorrichtung gemäß einem der Ansprüche 12 oder 13, bei der die Flüssigkeitszufuhreinrichtung (130) Sprühdüsen (131) und/oder Tropfdüsen (132) umfaßt.

15. Vorrichtung gemäß einem der Ansprüche 12 bis 14, bei der eine Stützeinrichtung (170) vorgesehen ist, die zum vertikal nach oben oder horizontal seitwärts gerichteten Wachstum der Algen im Kultivierungsraum (110) eingerichtet ist.

16. Vorrichtung gemäß einem der Ansprüche 12 bis 15, bei der eine Abschirmeinrichtung (180) und/oder eine Zugeinrichtung (190) zur Förderung des Längenwachstums der Algen vorgesehen sind.

17. Vorrichtung gemäß einem der Ansprüche 12 bis 16, bei der der Kultivierungsraum (110) durch eine geschlossene Kammer (100) gebildet wird.

18. Algenzuchtanlage, bei der mehrere Vorrichtungen gemäß einem der Ansprüche 12 bis 17 modulförmig zusammengesetzt sind.

19. Verwendung einer Vorrichtung gemäß einem der Ansprüche 12 bis 17 zur Kultivierung von Braunalgen nach einem Verfahren gemäß der Ansprüche 1 bis 11.
